# EUROPÄISCHE PATENTANMELDUNG

(11) **EP 1 923 207 A2**
(43) Veröffentlichungstag der Anmeldung: **21.05.2008**
(21) Anmeldenummer: 08002897.0
(22) Anmeldetag: 16.02.2008
(51) Int. Cl.: B30B 1/26, H02K 7/02, B30B 15/10, B30B 15/12

(54) **Antriebseinrichtung für eine Umformmaschine, insbesondere Pressenantrieb**

(71) Anmelder: Desch Antriebstechnik GmbH & Co. KG, 59759 Arnsberg (DE); Bifrangi S.p.A., 36065 Mussolente (IT)
(72) Erfinder: Die Erfindernennung liegt noch nicht vor
(74) Vertreter: Brune, Axel

(57) **Zusammenfassung**

Antriebseinrichtung für eine Umformmaschine, insbesondere Pressenantrieb, umfassend mindestens einen elektrischen Antrieb mit einem Rotor (1, 1a) und einem Stator (2, 2a) und ein Schwungrad (3), wobei die Antriebseinrichtung mit einem einzigen elektrischen Antrieb ausgestattet ist, wobei der elektrische Antrieb unmittelbar in oder an dem Schwungrad (3) angebracht ist.

## Beschreibung

Die vorliegende Erfindung betrifft eine Antriebseinrichtung für eine Umformmaschine, insbesondere einen Pressenantrieb, gemäß dem Oberbegriff des Anspruchs 1.

Eine Antriebseinrichtung für eine Umformmaschine der vorgenannten Art ist beispielsweise aus der DE 100 07 505 B4 bekannt geworden. Hier wird eine elektrische Antriebseinrichtung, insbesondere für Pressenanlagen und/oder deren Bestandteile, mit einem Haupt-Elektromotor zum Antreiben eines Schwungrades beschrieben, welches über eine lösbare Kupplungseinrichtung eine Antriebswelle antreibt. Die Besonderheit der hier offenbarten elektrischen Antriebsvorrichtung liegt darin, dass sie mit einem Zusatz-Elektromotor ausgestattet ist, der zusätzlich zum Antrieb der Antriebswelle nutzbar ist, wobei der Haupt-Elektromotor und der Zusatz-Elektromotor innerhalb des Schwungrades angeordnet sind. Durch diese Maßnahme soll ein modulartiger Aufbau der elektrischen Antriebsvorrichtung erreicht werden, der es ermöglichen soll, dass die Antriebsvorrichtung für die verschiedensten Zwecke, z.B. bei den verschiedensten Arten von Pressenanlagen bzw. einzelnen Pressen und deren Bestandteilen, wie z.B. bei Auswerfersystemen oder bei Transfersystemen, verwendet werden kann und hierbei nur einen geringen Bauraum in Anspruch nimmt.

Nachteilig in diesem Zusammenhang ist jedoch, dass eine derart ausgestaltete Antriebseinrichtung relativ anspruchsvoll aufgebaut ist und für manchen angestrebten Verwendungszweck, insbesondere als Antriebseinrichtung für eine Umformmaschine mit Bestandteilen ausgestattet ist, die nicht benötigt werden, jedoch hohe Kosten durch Installation und Wartung verursachen können.

Die Aufgabe der vorliegenden Erfindung liegt nunmehr darin, eine Antriebseinrichtung für eine Umformmaschine vorzuschlagen, die kostengünstig aufgebaut ist und einen einfachen, wartungsfreundlichen Aufbau aufweist.

Erfindungsgemäß wird diese Aufgabe durch eine Antriebseinrichtung für eine Umformmaschine mit den kennzeichnenden Merkmalen des Anspruchs 1 gelöst. Dadurch, dass die Antriebseinrichtung mit einem einzigen elektrischen Antrieb ausgestattet ist, wobei der elektrische Antrieb unmittelbar in oder an dem Schwungrad angebracht ist, kann ein für die Bedürfnisse von Umformmaschinen optimierter Antrieb bereitgestellt werden. Das Schwungrad wird mit ausgekuppelter Kupplung durch den elektrischen Antrieb auf Nenndrehzahl gebracht. Anschließend wird die Kupplung eingekuppelt und treibt die Getriebeeingangswelle an, wodurch letztendlich das Getriebe und daran anschließend die Umformmaschine angetrieben wird. Das Schwungrad erfährt eine Drehzahlverringerung durch die Energieentnahme bei einem Umformvorgang. Der einzige elektrische Antrieb beschleunigt das Schwungrad erneut auf die geforderte Nenndrehzahl. Durch den Wegfall des ansonsten üblichen Riementriebes arbeitet der erfindungsgemäß vorgeschlagene Pressenantrieb unerwartet geräuscharm. Ein Riemenverschleiß entfällt vollständig und auch ein Energieverlust durch einen eventuellen Schlupf im Riementrieb kann ausgeschlossen werden. Auch erweist sich die vorgeschlagene Antriebseinrichtung als sehr kompakt, da entsprechend auf ausladende Anordnungen, wie beispielsweise den Riementrieb, verzichtet werden kann. Darüber hinaus hat sich herausgestellt, dass die Beschränkung auf einen einzigen elektrischen Antrieb in oder an dem Schwungrad für den Antrieb einer Umformmaschine vollständig ausreichend ist. Insofern ist vorgeschlagene Antrieb vor Kostengesichtspunkten optimal ausgestaltet und ferner weniger störungsanfällig.

Weitere Vorteile der vorgeschlagenen Antriebseinrichtung ergeben sich aus den Merkmalen der rückbezogenen Unteransprüche. Es hat sich hier als besonders vorteilhaft erwiesen, einen an dem Getriebegehäuse angebrachten Statoranschlussflansch zur Aufnahme des Stators vorzusehen, der sich in Richtung der Rotoraufnahme, insbesondere der kreisförmigen Aussparung in der Stirnseite des Schwungrads, erstreckt. Dadurch, dass der Stator endseitig eines derart ausgeführten Statoranschlussflansches angeordnet ist, können die elektrischen Anschlusskabel für den aus Spulen bestehenden Stator sehr unproblematisch von dem Getriebegehäuse über den Statoranschlussflansch zu dem Stator gelegt werden.

Auch hat sich eine alternative Ausführungsform der vorgeschlagenen Antriebseinrichtung als besonders vorteilhaft erwiesen, die sich dadurch auszeichnet, dass der Rotor auf der Innenseite des Rotoranschlussflansches angeordnet ist. Durch die Anordnung auf der Innenseite des Rotoranschlussflansches kann eine vorteilhafte Befestigung des Rotors, auch bei hohen Drehzahlen des Schwungrads und den hier auftretenden Zentripetal- bzw. Zentrifugalkräften, gewährleistet werden.

Auch dadurch, dass der Statoranschlussflansch und der Rotoranschlussflansch lösbar an der Nabe bzw. dem Schwungrad bzw. dem Getriebegehäuse befestigt sind, kann die Antriebseinrichtung auf einfache Art und Weise gewartet werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine schematische Ansicht auf eine erfindungsgemäße Antriebseinrichtung in einer ersten Ausführungsform;
- Fig. 2: eine schematische Ansicht auf eine erfindungsgemäßen Antriebseinrichtung in einer zweiten Ausführungsform;

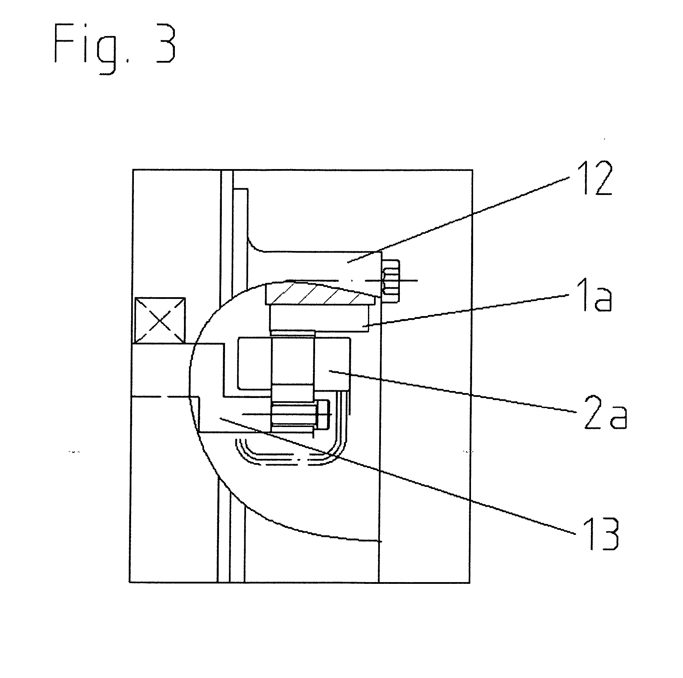

- Fig. 3: eine vergrößerte schematische Ansicht auf eine erfindungsgemäßen Antriebseinrichtung in einer zweiten Ausführungsform.

Folgende Bezugszeichen sollen nachfolgenden funktionalen Bestandteilen der erfindungsgemäßen Antriebseinrichtung für eine Umformmaschine zugeordnet werden:
- 1: Rotor
- 2: Stator
- 3: Schwungrad
- 4: Nabe
- 5: Getriebe / Getriebegehäuse
- 6: Maschinenrahmen (Umformeinrichtung, bspw. Presse)
- 7: Kupplung, insbesondere Kupplungs-Brems-Kombination
- 8: Maschinenanschlussflansch
- 9: Getriebeeingangswelle
- 10: Rotoraufnahme
- 11: Statoranschlussflansch
- 12: Rotoranschlussflansch
- 13: Statoranschlussflansch
- 1 a: Rotor
- 2a: Stator

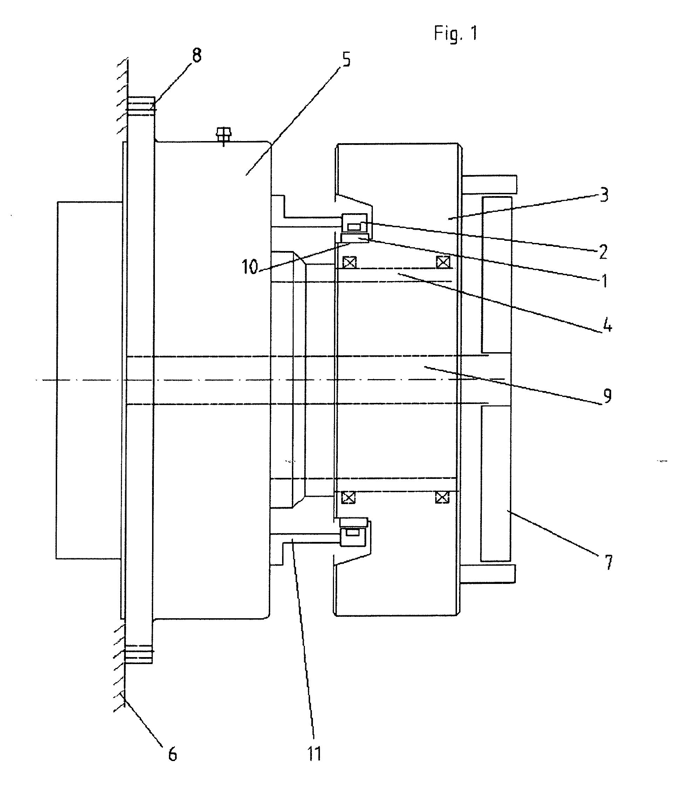

### Zunächst wird auf Fig. 1 Bezug genommen.

Eine erfindungsgemäße Antriebseinrichtung für eine Umformmaschine umfasst im Wesentlichen einen elektrischen Antrieb, umfassend einen Rotor 1 und einem Stator 2, ferner ein Schwungrad 3, eine Nabe 4, ein Getriebe und eine Kupplung 7, insbesondere eine Kupplungs-Brems-Kombination.

Das Getriebe, vorzugsweise ein Planetengetriebe, weist ein Getriebegehäuse 5 auf und ist über einen geeigneten Maschinenanschlussflansch 8 an einem Maschinenrahmen 6, beispielsweise einer Presse, befestigt. Der Aufbau des Getriebes ist dem Fachmann bekannt, so dass hier lediglich das Getriebegehäuse 5 dargestellt ist. Auf der dem Maschinenanschlussflansch 8 abgewandten Seite des Getriebegehäuses 5 erstreckt sich die hohlzylinderförmige Nabe 4, die als Aufnahme für das Schwungrad 3 dient. Das Schwungrad 3 ist über geeignete Lager drehbar auf der Nabe 4 aufgenommen. Auf der dem Getriebegehäuse 5 abgewandten Seite der Nabe 4 ist die Kupplungs-Brems-Kombination 7 vorgesehen, die wiederum mit einer Getriebeeingangswelle 9 verbunden ist, die durch die Nabe 4 bis zum Getriebe 5 verläuft. Die Kupplung 7 ist dazu eingerichtet, das Schwungrad 3 bei Bedarf mit der Getriebeeingangswelle 9 zu verbinden, so dass die Rotation des Schwungrades 3 auf die Getriebeeingangswelle 9 übertragen werden kann. Die Bremse 7 dient zum Abbremsen der Getriebeeingangswelle 9.

Das Schwungrad 3 wird erfindungsgemäß nicht durch einen Riementrieb oder einen ähnlichen externen Antrieb angetrieben, sondern durch einen in oder an dem Schwungrad 3 vorgesehenen elektrischen Antrieb. Hierzu ist in einer ersten bevorzugten Ausführungsform der erfindungsgemäßen Antriebseinrichtung gemäß Fig. 1 vorgesehen, dass das Schwungrad 3 auf der dem Getriebe 5 zugewandeten Seite mit einer Rotoraufnahme 10 für den Rotor 1 ausgestattet ist. Die Rotoraufnahme 10 kann beispielsweise als kreisförmige Aussparung innerhalb des Schwungsrads ausgestaltet sein. Der dem Rotor 1 zugeordnete Stator 2 ist an einem hohlzylinderförmigen Statoranschlussflansch 11 angebracht. Der Statoranschlussflansch 11 ist wiederum über geeignete Anschlussmittel am Getriebegehäuse 5 befestigt und ragt in die Rotoraufnahme 10 des Schwungrads 3 hinein oder erstreckt sich zumindest in die Richtung der Rotoraufnahme 10. Der Rotor 1 ist in der hier vorgeschlagenen Ausführungsform als Permanentmagnet, bzw. als eine Anordnung von Permanentmagnetelementen ausgestaltet, wohingegen der Stator 2 als Spulenanordnung ausgestaltet ist. Rotor 1 und Stator 2 stehen sich derart gegenüber, wie es für einen elektrischen Antrieb notwendig ist.

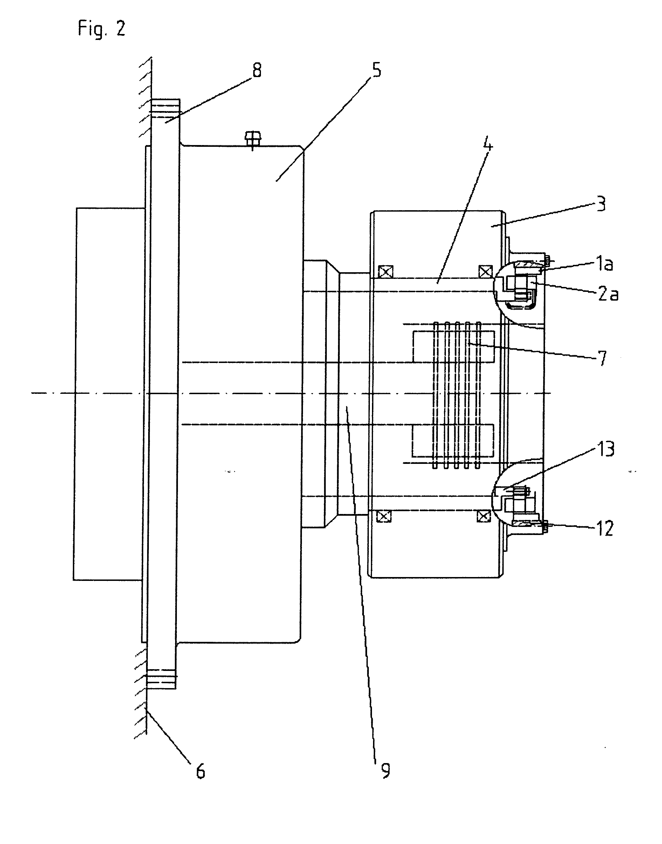

Eine alternative Ausführungsform der erfindungsgemäßen Antriebseinrichtung ist in Fig. 2 dargestellt. Der Aufbau von Getriebe und Nabe ist im Wesentlichen vergleichbar mit der bereits in Fig. 1 beschriebenen Ausführungsform. Auch hier erstreckt sich die hohlzylinderförmige Nabe 4 von dem Getriebegehäuse 5 zur Aufnahme des Schwungrades 3. Abweichend ist jedoch vorgesehen, dass die Kupplung 7 im wesentlichen innerhalb der Nabe 4 vorgesehen ist. Insofern ist die dem Getriebegehäuse 5 abgewandte Seite der Nabe 4 und des Schwungrades 3 frei zur Aufnahme des elektrischen Antriebs.

Hierzu ist ein hohlzylinderförmiger Rotoranschlussflansch 12 vorgesehen, der an dem Schwungrad 3 über geeignete Anschlussmittel befestigt ist und den Rotor 1a des elektrischen Antriebs aufnimmt. In dieser Ausführungsform ist entsprechend vorgesehen, dass der Stator 2a von einem Statoranschlussflansch 13 aufgenommen ist, der an der Nabe 4 befestigt ist. Der Rotoranschlussflansch 12 ist hohlzylinderförmig ausgestaltet und weist einen Flansch zum Anschluss an das Schwungrad 3 auf. Der Statoranschlussflansch 13 ist kreisförmig ausgestaltet und weist einen Flansch zum Anschluss an die Nabe 4 auf. Der Rotor 1a ist hier als eine kreisförmige Anordnung von Permanentmagneten ausgestaltet, wohingegen der Stator 2a als eine kreisförmige Anordnung von Spulen ausgestaltet ist.

Hinsichtlich ihrer Funktion unterscheiden sich die beiden Ausführungsformen der erfindungsgemäßen Antriebseinrichtung nicht. Das Schwungrad 3 wird mit ausgekuppelter Kupplung 7 durch den elektrischen Antrieb auf Nenndrehzahl gebracht. Anschließend wird die Kupplung 7 eingekuppelt und treibt die Getriebeeingangswelle 9 an, wodurch letztendlich das Getriebe 5 und daran anschließend die Umformmaschine angetrieben wird. Das Schwungrad 3 erfährt eine Drehzahlverringerung durch die Energieentnahme bei einem Umformvorgang. Der elektrische Antrieb beschleunigt das Schwungrad 3 erneut auf die geforderte Nenndrehzahl.

Die Ausführungsform gemäß Fig. 1 zeichnet sich dadurch aus, dass die elektrische Installation, insbesondere die Kabel- und Kontaktführung für den elektrischen Antrieb, sehr einfach ausgestaltet sein kann. Hierzu ist vorgesehen, dass der mit elektrischem Strom zu versorgende Stator 2 über den Statoranschlussflansch 11 fest mit dem Getriebegehäuse 5 des Getriebes verbunden ist. Der im Wesentlichen aus Permanentmagneten bestehende Rotor 1 ist demgegenüber an bzw. in dem rotierenden Schwungrad 3 angeordnet. Es müssen somit keine aufwendigen Schleifkontakte oder ähnlich Maßnahmen zur Versorgung der Spulen mit elektrischer Energie vorgenommen werden. Ferner sind die Spulen des Stators 2 von dem feststehenden Teil der Antriebseinrichtung, insbesondere vom Getriebegehäuse 5 aus erreichbar, d.h. die elektrischen Anschlusskabel können beispielsweise von dem Getriebegehäuse 5 über den Statoranschlussflansch 11 bis zum Stator 2 verlegt werden.

Die Ausführungsform gemäß Fig. 2 verfolgt mit der Anordnung des aus Permanentmagneten bestehenden Rotors 1a auf der Innenfläche des Rotoranschlussflansches 12 vornehmlich ein anderes Ziel. Dadurch, dass der Rotor 1a auf der Innenfläche des Rotoranschlussflansches 12 angebracht ist, werden die durch Rotation des Schwungrads 3 auf den Rotor 1a, insbesondere auf die einzelnen Permanentmagnetsegmente, einwirkenden Kräfte, insbesondere Zentripetal- und Zentrifugalkräfte, auf vorteilhafte Weise von dem Rotoranschlussflansch 12 aufgenommen. Eine derartige Anordnung hat Vorteile gegenüber einer Anordnung eines Rotors auf der Außenseite eines rotierenden Maschinenteils. Die Gefahr, dass sich einzelne oder alle Rotorelemente ablösen ist hier umso mehr gegeben und es müssen entsprechend aufwendige Befestigungs- und Sicherheitsmaßnahmen ergriffen werden.

Vorteilhafterweise erfolgt in der Ausführungsform gemäß Fig. 2 auch eine Ableitung des Drehmoments direkt über die feststehende Nabe 4 und das Getriebegehäuse 5 auf den Maschinenrahmen 6. Auch ist die Montage, der Austausch und die Wartung des elektrischen Antriebs in einer Ausführungsform gemäß Fig. 2 sehr einfach ausgestaltet, da der elektrische Antrieb, insbesondere Rotor und Stator, im Wesentlichen aus Ringelementen bestehen, die von der Frontseite des Schwungrades 3 gut zugänglich sind.

Beide erfindungsgemäßen Ausführungsformen weisen jedoch weitere Vorteile auf. Es ist beispielsweise von Vorteil, dass die den Rotor 1, 1a bildenden Permanentmagnete auf einer Kreisbahn mit einem vergleichsweise großen Durchmesser angeordnet werden können. Hierdurch kann ein vergleichsweise großes Drehmoment erzeugt werden.

## Patentansprüche

1. Antriebseinrichtung für eine Umformmaschine, insbesondere Pressenantrieb, umfassend mindestens
- einen elektrischen Antrieb mit einem Rotor (1, 1a) und einem Stator (2, 2a) und
- ein Schwungrad (3)
**dadurch gekennzeichnet, dass**
die Antriebseinrichtung mit einem einzigen elektrischen Antrieb ausgestattet ist, wobei der elektrische Antrieb unmittelbar in oder an dem Schwungrad (3) angebracht ist.

2. Antriebseinrichtung nach einem der vorhergehenden Ansprüche, **dadurch gekennzeichnet, dass** der Rotor (1, 1a) als Permanentmagnetanordnung und der Stator (2, 2a) als Spulenanordnung ausgestaltet ist.

3. Antriebseinrichtung nach einem der vorhergehenden Ansprüche, **dadurch gekennzeichnet, dass** die Antriebseinrichtung ein Getriebe, vorzugsweise ein Planetengetriebe, in einem Getriebegehäuse (5), einen sich von dem Getriebegehäuse (5) erstreckenden Nabe (4) zur drehbaren Aufnahme des Schwungrads (3), eine durch die Nabe (4) verlaufende Getriebeeingangswelle (9), sowie eine Kupplung (7), vorzugsweise eine Kupplungs-Brems-Kombination, die zwischen dem Schwungrad (3) und der Getriebeeingangswelle (9) geschaltet ist, aufweist.

4. Antriebseinrichtung nach einem der vorhergehenden Ansprüche, **dadurch gekennzeichnet, dass** das Schwungrad (3) mit einer Rotoraufnahme (10) ausgestattet ist, die als kreisförmige Aussparung in einer Stirnseite des Schwungrads (3) ausgestaltet ist, wobei der Rotor (1) in der Rotoraufnahme (10) aufgenommen ist.

5. Antriebseinrichtung nach einem der vorhergehenden Ansprüche, **dadurch gekennzeichnet, dass** ein an dem Getriebegehäuse angebrachter Statoranschlussflansch (11) zur Aufnahme des Stators (2) vorgesehen ist, der sich in Richtung der Rotoraufnahme (10), insbesondere der kreisförmigen Aussparung in der Stirnseite des Schwungrads (3), erstreckt.

6. Antriebseinrichtung nach einem der vorhergehenden Ansprüche, **dadurch gekennzeichnet, dass** es sich bei dem Statoranschlussflansch (11) um einen hohlzylinderförmigen Körper handelt, der mit Mitteln zur Befestigung an dem Getriebegehäuse (5) ausgestattet ist.

7. Antriebseinrichtung nach einem der Ansprüche 1 bis 4, **dadurch gekennzeichnet, dass** ein Rotoranschlussflansch (12) vorgesehen ist, der stirnseitig des Schwungrades (3) befestigt ist.

8. Antriebseinrichtung nach einem der Ansprüche 1 bis 3 und 7, **dadurch gekennzeichnet, dass** der Rotor (1a) auf der Innenseite des Rotoranschlussflansches (12) angeordnet ist.

9. Antriebseinrichtung nach einem der Ansprüche 1 bis 3 und 7 bis 8, **dadurch gekennzeichnet, dass** es sich bei dem Rotoranschlussflansch (12) um einen hohlzylinderförmigen Körper handelt, der mit Mitteln zur Befestigung an dem Schwungrad (3) ausgestattet ist.

10. Antriebseinrichtung nach einem der Ansprüche 1 bis 3 und 7 bis 9, **dadurch gekennzeichnet, dass** ein Statoranschlussflansch (13) vorgesehen ist, der endseitig der Nabe (4) angebracht ist, wobei der Stator (2a) auf dem Statoranschlussflansch (13) angeordnet ist.

11. Antriebseinrichtung nach einem der Ansprüche 1 bis 3 und 7 bis 10, **dadurch gekennzeichnet, dass** es sich bei dem Statoranschlussflansch (13) um einen kreisförmigen Körper handelt, der mit Mitteln zu Befestigung an der Nabe (4) ausgestattet ist.
